# EUROPÄISCHE PATENTSCHRIFT

(11) **EP 0 939 023 B1**
(45) Veröffentlichungstag und Bekanntmachung des Hinweises auf die Patenterteilung: **08.12.2004**
(21) Anmeldenummer: 99101448.1
(22) Anmeldetag: 27.01.1999
(51) Int. Cl.: B62D 33/06

(54) **Schlafliege in Nutzfahrzeug-Fahrerhäusern**
Sleeping bed in the cabin of a truck
Couchette dans une cabine de camion

(30) Priorität: 27.02.1998 DE 19808449
(43) Veröffentlichungstag der Anmeldung: 01.09.1999
(73) Patentinhaber: MAN Nutzfahrzeuge Aktiengesellschaft, 80976 München (DE)
(72) Erfinder: Watzek, Gerhard, Dipl.-Ing.(FH), 80935 München (DE); Häberle, Hartmut, Dipl.-Ing.(FH), 80997 München (DE); Radkohl, Helmut, Dipl.-Ing.(TU), 80992 München (DE)

(56) Entgegenhaltungen:
- GB-A- 192 230
- US-A- 3 811 138
- US-A- 4 084 276

## Beschreibung

Die Erfindung betrifft eine klappbare Schlafliege in einem Fahrerhaus eines Nutzfahrzeuges, gemäß dem Oberbegriff des Anspruches 1.

Insbesondere im Fahrzustand von Nutzfahrzeugen wirken die dabei im Fahrerhaus auftretenden, horizontalen Längs- und Querstöße sowie Vertikalstöße unmittelbar auf eine horizontal aufgeklappte Schlafliege und einen gegebenenfalls darauf befindlichen Ruhesuchenden. Dessen Wohlbefinden kann hierdurch in unangenehmer Weise beeinträchtigt sein. Zudem können bei einer unbenutzten, gegebenenfalls in vertikaler Verstauungsposition befindlichen Schlafliege im Fahrzeugbetrieb unerwünschte Klappergeräusche entstehen.

Aus der US 3 811 138 A ist eine verschwenkbare Schlafliege im Innenraum eines Schiffes bekannt, die stimseitig von Führungsschienen geführt und gehalten ist. Die Führungsschienen sind an Wandungen angeordnet, welche die Schlafliege stimseitig begrenzen. Die Wandungen weisen weitere, die Schlafliege haltende Fixierelemente sowie Haltegurte auf, welche die Schlafliege in horizontaler Gebrauchslage fixieren.

Aus der gattungsgemäßen GB 192 230 A sind Stoßabsorber für Betten, Tische u. ä. in beispielsweise Eisenbahnwaggons bekannt, die zwecks Stoßabsorbtion zwischen Bett und dessen Abstützung angeordnet sind.

Es ist Aufgabe der Erfindung, den Liegekomfort einer verschwenkbaren Schlafliege in einem Fahrzeug eines Nutzfahrzeuges mit einfachen und kostengünstigen Mitteln zu erhöhen sowie gegebenenfalls auftretende Klappergeräusche der Schlafliege bei Fahrzeugbetrieb zu unterbinden.

Diese Aufgabe wird erfindungsgemäß durch die Merkmale des Anspruches 1 gelöst.

Die erfindungsgemäße, klappbare Schlafliege ist mittels ihrer hinteren Lagerungen um eine quer zur Fahrtrichtung liegende Achse von einer vertikalen Verstaulage in eine horizontale Gebrauchslage klappbar, wobei eine schwingungsmäßige Entkoppelung von Schlafliege und Fahrerhaus wenigstens durch im Bereich von in Fahrtrichtung gesehen vorderen Lagerungen der Schlafliege angeordneter, gummielastischer Federe-/Dämpfungselemente gegeben ist und wobei die in Fahrtrichtung gesehen vorderen Lagerungen der Schlafliege vom Typ Stützlager und die in Fahrtrichtung gesehen hinteren Lagerungen der Schlafliege vom Typ Kippdrehlager sind.

Die Feder-/Dämpfungselemente sind dabei durch Gummielemente gegeben, die entweder an fahrerhausfesten Kulissen oder an der Unterseite der Schlafliege angeordnet sind, wobei die an den vorderen Lagerungen angeordneten, vorderen Gummielemente entweder zur bedarfsweisen Aufnahme von stirnseitig der Schlafliege abragender Stützbolzen oder zur bedarfsweisen, abstützenden Umgreifung von an einer Innenwand des Fahrerhauses angeordneter Befestigungsbügel vorgesehen sind.

Die an den hinteren Lagerungen angeordneten, hinteren Gummielemente sind zur dauerhaften Aufnahme von stimseitig der Schlafliege abragender Drehbolzen vorgesehen. Die hinteren Gummielemente können beispielsweise durch Gummibuchsen realisiert sein.

Infolge der schwingungsmäßigen Entkoppelung der an das Fahrerhaus angebundenen Schlafliege im Bereich hieran jeweils stimseitig angeordneter Lagerungen sind die auf die Schlafliege wirkenden Schwingungen in allen drei Ebenen erheblich gedämpft. Dadurch kann das Wohlbefinden eines sich gegebenenfalls auf der Schlafliege befindenden Ruhesuchenden wesentlich erhöht und die an den Lagerungen der Schlafliege gegebenenfalls auftretenden, störenden Klappergeräusche wirksam unterbunden werden.

Die klappbare Schlafliege kann durch das Vorsehen vorderer und hinterer gummielastischer Feder-/Dämpfungselemente sowohl in horizontaler Gebrauchslage als auch in vertikaler Verstauungsposition weitgehend von den im Fahrbetrieb des Fahrzeuges auftretenden Schwingungen abgekoppelt werden, wodurch eine spürbare Geräuschminderung erzielbar ist.

Gemäß einer weiteren Ausgestaltung der Erfindung kann die Schlafliege im Bereich der zur vertikalen Abstützung vorgesehenen, vorderen Lagerungen zusätzlich arretierbar sein.

Weitere vorteilhafte Ausgestaltungen der Erfindung sind den übrigen Unteransprüchen zu entnehmen. Nachfolgend ist die erfindungsgemäße Lösung an Hand in der Zeichnung dargestellter Ausführungsbeispiele näher erläutert.

Es zeigen:
- Fig. 1: je Zeichnungshälfte eine jeweils hälftig dargestellte Variante einer vorschwenkbaren Schlafliege in der Draufsicht,
- Fig. 2: im Schnitt II-II gemäß Fig. 1 eine als Kippdrehlager ausgeführte hintere Lagerung einer verschwenbaren Schlafliege,
- Fig. 3: im Schnitt III-III gemäß Fig. 1 eine als Stützlager ausgeführte, vordere Lagerung einer verschwengbaren Schlafliege und
- Fig. 4: im Schnitt IV-IV gemäß Fig. 1 eine Variante einer als Stützlager ausgebildeten, vorderen Lagerung einer verschwenbaren Schlafliege.

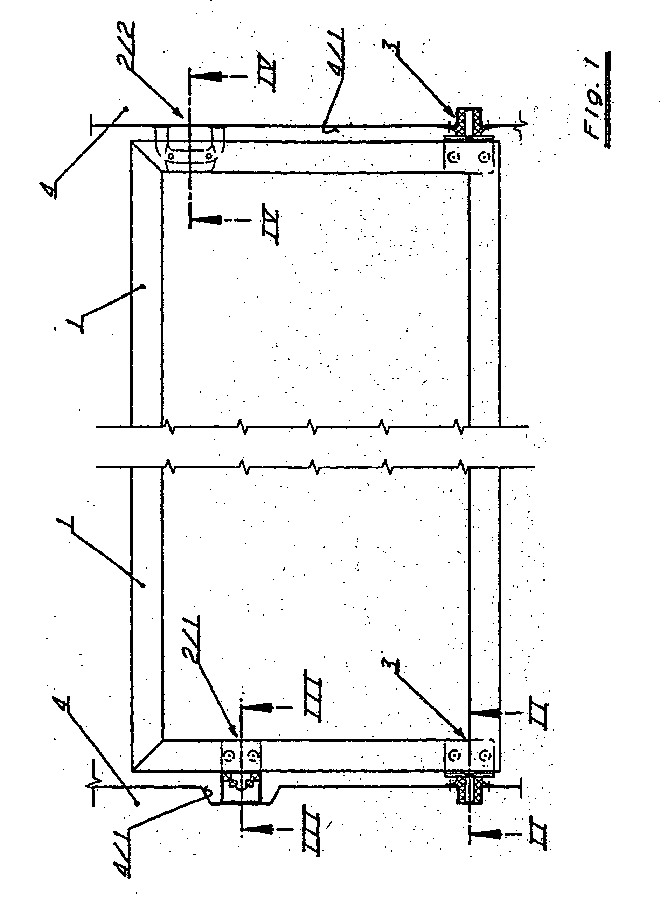

In Fig. 1 ist je Zeichnungshälfte eine unterschiedliche Variante einer jeweils hälftig dargestellten, verschwenkbaren Schlafliege 1 in einem Fahrerhaus 4 eines Nutzfahrzeuges in der Draufsicht gezeigt. Dabei ist die verschwenkbare Schlafliege 1 über je Fahrzeugseite eine in Fahrtrichtung gesehen vordere Lagerung 2/1, 2/2 und jeweils eine hintere Lagerung 3 mit einer Innenseite 4/1 des Fahrerhauses 4 verbunden. Die jeweils hinteren Lagerungen 3 der Schlafliege 1 sind vom Typ Kippdrehlager. Als vordere Lagerungen 2/1, 2/2 sind je Zeichnungshälfte eine Variante einer Lagerung vom Typ Stützlager gezeigt.

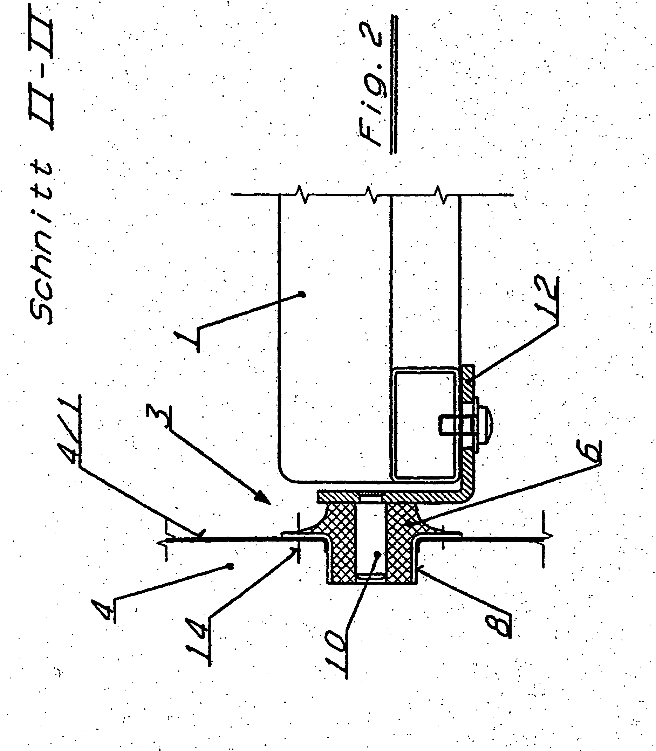

Die schwingungsmäßige Entkoppelung von Schlafliege 1 und Fahrerhaus 4 ist durch an den vorderen und hinteren Lagerungen 2/1, und 2/2, 3 angeordnete, gummielastische Feder/Dämpfungselemente 5, 6, 18 erzielt (Fig. 2, 3, 4). Durch diese Feder-/Dämpfungselemente 5, 6, 18 ist die um die hinteren Lagerungen 3 verschwenkbare und hier in ihrer horizontalen Nutzstellung aufgeklappte Schlafliege in allen drei Ebenen schwingungsmäßig entkoppelt und erheblich gedämpft. Dadurch ist das Wohlbefinden eines gegebenenfalls auf der Schlafliege befindlichen Ruhesuchenden wesentlich erhöht. Des weiteren sind auch die bei einer unbenutzten, in Horizontal- oder Vertikallage befindlichen Schlafliege 1 im Fahrzustand des Fahrzeuges auftretenden metallischen Klappergeräusche wirksam unterbunden. Die in horizontaler Nutzstellung. befindliche Schlafliege ist durch in diesen beiden Ausführungsbeispielen gezeigten, vorderen Lagerungen 2/1, 2/2 in vertikaler Richtung abgestützt. In einem anderen, hier nicht gezeigten Ausführungsbeispiel können die vorderen Lagerungen zusätzlich zur vertikalen Abstützung verriegelbar sein. In einem weiteren, hier nicht gezeigten Ausführungsbeispiel kann anstelle der verschwenkbaren Schlafliege eine starr innerhalb des Fahrerhauses angeordnete Schlafliege vorgesehen sein. Die diese abstützenden Lager können durch einfache Auflager gegeben sein, die von an fahrerhausfesten Kulissen befestigten Feder-/Dämpfungselementen aufgenommen sind. Die Feder-/Dämpfungselemente können in diesem Fall durch einfache Gummibuchsen gegeben sein.

In Fig. 2 ist in einem vergrößerten Ausschnitt gemäß eines Vertikalschnittes II-II nach Fig. 1 die als Kippdrehlager 3 ausgeführte, hintere Lagerung der verschwenkbaren Schlafliege 1 dargestellt. Dabei ist ein mit der Schlafliege 1 über ein Winkelprofil 12 fest verbundener, feststehender Drehbolzen 10 von einem hinteren Feder-/Dämpfungselement 6 aufgenommen. Dieses ist innerhalb einer mit dem Fahrerhaus 4 durch Befestigungselemente 14 fest verbundenen, hinteren Kulisse 8 angelordnet. Das in dieser Kulisse 8 aufgenommene, hier als Gummibuchse ausgeführte hintere Feder-/Dämpfungselement 6 ist mit der Kulisse 8 kraft- und/oder formschlüssig verbunden. Der Drehbolzen 10 ist innerhalb der Gummibuchse 6 spielfrei drehbar. Gemäß einer hier nicht gezeigten Version kann die Gummibuchse 6 innenseitig und/oder außenseitig eine verbundartige Hülse aus Metall oder dergleichen aufweisen.

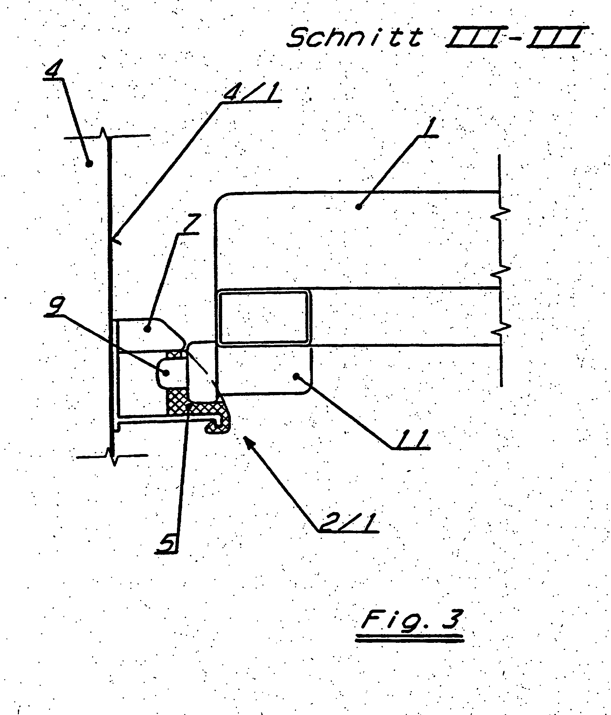

In Fig. 3 ist in vergrößertem Ausschnitt eine hier als Stützlager ausgeführte, vordere Lagerung 2/1 einer innerhalb eines Fahrerhauses 4 verschwenkbaren Schlafliege 1 in einem Vertikalschnitt III-III gemäß Fig. 1 gezeigt. Dabei ist ein an der Unterseite der Schläfliege 1 angebrachter Halter 11 mit einem Stützbolzen 9 angeordnet. Der Halter 11 und der Stützbolzen 9 sind Bestandteil der vorderen Lagerung 2/1 der Schlafliege 1. Zur vertikalen Abstützung der aus ihrer vertikalen Verstauungsposition in ihre horizontale Nutzposition geschwenkte Schlafliege 1 kommt der hieran befestigte Stützbolzen 9 in ein hier als Gümmihalbschale 5 ausgeführtes Feder/Dämpfungselement abstützend zur Anlage. Die oberseitig geöffnet ausgebildete Gummihalbschale 5 ist formschlüssig von einer an einer Innenwandung des Fahrerhauses 4 fest angebrachten vorderen Kulisse 7 aufgenommen. Sowohl der Stützbolzen 9 als auch das diesen aufnehmende Feder-/Dämpfungsetement 5 können in variierten, hier nicht gezeigten Konfigurationen ausgeführt sein.

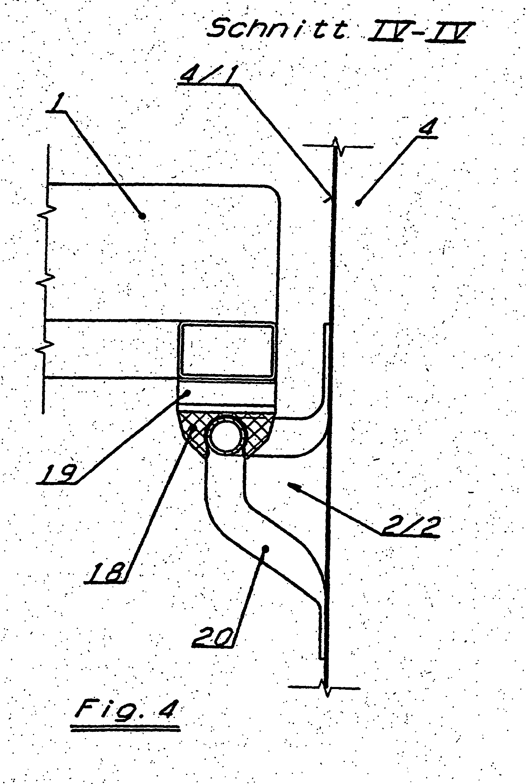

In Fig. 4 ist in vergrößertem Ausschnitt eine weitere Variante einer hier als Stützlager ausgeführten, vorderen Lagerung 2/2 einer innerhalb eines Fahrerhauses 4 verschwenkbaren Schlafliege 1 in einem Vertikatschnitt IV-IV gemäß Fig. 1 gezeigt. Dabei ist ein unterhalb der Schlafliege 1 fest angebrachter Halter 19 unterseitig mit einem Feder-/Dämpfungselement 18 versehen. Dieses besteht aus einem etwa zangenförmig ausgebildeten Guminielement 18, das bei Aufklappung der Schlafliege 1 in ihre horizontale Nutzstellung einen etwa horizontalen Abschnitt eines an der Innenseite 4/1 des Fahrerhauses 4 fest angeordneten Befestigungsbügel 20 form- und kraftschlüssig oberseitig umgreift. Damit ist die verschwenkbare Schlafliege 1 in ihrer Nutzstellung vertikal abgestützt.

## Patentansprüche

1. Klappbare Schlafliege in einem Fahrerhaus eines Nutzfahrzeuges, die mittels hinterer Lagerungen (3) der Schlafliege (1) um eine quer zur Fahrtrichtung liegende Achse von einer vertikalen Verstaulage in eine horizontale Gebrauchslage klappbar ist, wobei eine schwingungsmäßige Entkoppelung von Schlafliege (1) und Fahrerhaus (4) wenigstens durch im Bereich von in Fahrtrichtung gesehen vorderen Lagerungen (2/1,2/2) der Schlafliege (1) angeordneter, gummielastischer Feder-/Dämpfungselemente (5,18) gegeben ist, und wobei die in Fahrtrichtung gesehen vorderen Lagerungen (2/1, 2/2) der Schlafliege (1) vom Typ Stützlager und die in Fahrtrichtung gesehen hinteren Lagerungen (3) der Schlafliege (1) vom Typ Kippdrehlager sind, **dadurch gekennzeichnet, dass** die Feder-/Dämpfungselemente (5, 6, 18) durch Gummielemente gegeben sind, die entweder an fahrerhausfesten Kulissen (7, 8) oder an der Unterseite der Schlafliege (1) angeordnet sind, wobei die an den vorderen Lagerungen (2/1, 2/2) angeordneten, vorderen Gummielemente (5, 18) entweder zur bedarfsweisen Aufnahme von stirnseitig der Schlafliege (1) abragender Stützbolzen (9) oder zur bedarfsweisen, abstützenden Umgreifung von an einer Innenwand (4/1) des Fahrerhauses (4) angeordneter Befestigungsbügel (20) vorgesehen sind, und dass die an den hinteren Lagerungen (3) angeordneten, hinteren Gummielemente (6) zur dauerhaften Aufnahme von stirnseitig der Schlafliege (1) abragender Drehbolzen (10) vorgesehen sind.

2. Schlafliege nach Anspruch 1, **dadurch gekennzeichnet, dass** die Schlafliege (1) im Bereich der zur vertikalen Abstützung vorgesehenen, vorderen Lagerungen (2/1, 2/2) zusätztich arretierbar ist.

3. Schlafliege nach Anspruch 1, **dadurch gekennzeichnet, dass** die die Drehbolzen (10) der hinteren Lagerung (3) drehbar aufnehmenden hinteren Gummielemente (6) durch Gummibuchsen realisiert sind, die mittels hinterer Kulissen (8) mit einer Innenseite (4/1) des Fahrerhauses (4) fest verbunden sind.

4. Schlafliege nach einem der Ansprüche 1 und 2, **dadurch gekennzeichnet, dass** die die Stützbolzen (9) der vorderen Lagerungen (2/1) aufnehmenden vorderen Gummielemente (5) durch oberseitig geöffnet ausgebildete Gummihalbschalen realisiert sind, die mittels vorderer Kulissen (7) mit einer Innenseite (4/1) des Fahrerhauses (4) fest verbunden sind.

5. Schlafliege nach einem der Ansprüche 1 und 2, **dadurch gekennzeichnet, dass** das zur abstützenden Umgreifung des von der Innenwand (4/1) des Fahrerhauses (4) abragenden Befestigungsbügels (20) vorgesehene vordere Gummielement (18) durch ein etwa zangenförmig ausgebildetes, unterseitig der Schlafliege (1) befestigtes Gummielement realisiert ist.

## Claims

1. Folding bunk in the cab of a commercial vehicle, which bunk can be brought from a vertical storage position into a horizonal use position by folding it via bearings (3) on the rear side of the bunk (1) about an axis transverse to the vehicle's driving direction, whereby the bunk (1) and the cab (4) are vibration-decoupled at least by means of rubber-elastic spring/damper elements (5, 18) provided in the area of the bearings (2/1, 2/2) of the bunk (1) which bearings (2/1, 2/2) are, relative to the vehicle's driving direction, arranged at the front end of the bunk (1) and whereby said front-mounted bearings (2/1, 2/2) of said bunk (1) are support-type bearings and the bearings (3) of the bunk (1) which are rear-mounted in respect of the vehicle's driving direction are tilt-type pivot bearings, **characterised in that** the spring/damper elements (5, 6, 18) are provided in the form of rubber elements which are arranged either on cab-mounted blocks (7, 8) or on the underside of the bunk (1), whereby the front rubber elements (5, 18) arranged at the front bearings (2/1, 2/2) are provided either for holding, if necessary, the support pins (9) projecting from the front side of the bunk (1) or for supporting and encompassing, if necessary, the fastening bows (20) arranged on an inner wall (4/1) of the cab (4) and that the rear rubber elements (6) arranged on the rear bearings (3) are provided for permanently supporting the pivot pins (10) projecting from the front side of the bunk (1).

2. Bunk according to Claim 1, **characterised in that** the bunk (1) can be locked in the area of the front bearings (2/1, 2/2) provided for vertical support purposes.

3. Bunk according to Claim 1, **characterised in that** the rear rubber elements (6) which support the pivot pins (10) of the rear bearing (3) in a rotary manner are provided in the form of rubber bushes firmly connected with an inner side (4/1). of the cab (4) by means of rear blocks (8).

4. Bunk according to one of the Claims 1 and 2, **characterised in that** the front rubber elements (5) holding the support pins (9) of the front bearings (2/1) are provided in the form of rubber half-shells open at the top and firmly connected with an inner side (4/1) of the cab (4) by means of front blocks (7).

5. Bunk according to one of the Claims 1 and 2, **characterised in that** the front rubber element (18) provided for supporting and encompassing the fastening bows (20) projecting from the inner wall (4/1) of the cab (4) is designed as a roughly tong-shaped rubber element fastened to the underside of the bunk (1).

## Revendications

1. Couchette rabattable dans une cabine d'un véhicule industriel, qui est rabattable dans une position d'usage horizontale à un axe transversal à la direction de marche à partir d'une position verticale de rangement au moyen de paliers arrière (3), auquel cas un découplage des vibrations de la couchette (1) et de la cabine (4) existe au moins par le biais d'éléments de suspension/d'amortissement en caoutchouc élastique (5, 18) disposés dans la zone des paliers avant (2/1, 2/2) de la couchette (1), orientés dans la direction de marche, et auquel cas les paliers avant (2/1, 2/2) de la couchette (1), orientés dans la direction de marche, sont du type palier de support et les paliers arrière (3) de la couchette (1), orientés dans la direction de marche, sont du type palier basculant à pivotement, **caractérisée par le fait que** les éléments de suspension/d'amortissement (5, 6, 18) existent comme éléments en caoutchouc disposés soit sur des coulisses (7, 8) fixées à la cabine, soit sur la face inférieure de la couchette (1), auquel cas les éléments en caoutchouc avant (5, 18) disposés sur les paliers avant (2/1, 2/2) sont prévus soit pour accueillir si besoin des axes de support (9) dépassant sur la face de devant de la couchette (1), soit pour supporter des étriers de fixation (20) disposés sur une paroi intérieure (4/1) de la cabine (4) et **par le fait que** les éléments en caoutchouc (6) disposés sur les paliers arrière (3) sont prévus pour accueillir en permanence les axes à pivotement (10) dépassant sur la face de devant de la couchette (1).

2. Couchette selon la revendication 1, **caractérisée par le fait que** la couchette (1) peut en outre être bloquée dans la zone des paliers avant (2/1, 2/2) prévus comme soutien vertical.

3. Couchette selon la revendication 1, **caractérisée par le fait que** les éléments en caoutchouc arrière (6) accueillant de manière pivotable les axes à pivotement (10) des paliers arrière (3) sont des douilles en caoutchouc reliées à un côté intérieur (4/1) de la cabine (4) au moyen de coulisses arrière (8).

4. Couchette selon une des revendications 1 et 2, **caractérisée par le fait que** les éléments en caoutchouc avant (5) accueillant les axes de support (9) des paliers avant (2/1) sont formés de demi-coussinets en caoutchouc, formés de manière ouverte sur la face de dessus, et ces demi-coussinets sont reliés fixement au côté intérieur (4/1) de la cabine (4) au moyen de coulisses avant (7)

5. Couchette selon une des revendications 1 et 2, **caractérisée par le fait que** l'élément en caoutchouc avant (18) prévu comme support de l'étrier de fixation (20) dépassant de la paroi intérieure (4/1) de la cabine (4) est formé d'un élément en caoutchouc à l'apparence d'une pince et fixé en dessous de la couchette (1).
